# EUROPÄISCHE PATENTSCHRIFT

(11) **EP 1 050 175 B1**
(45) Veröffentlichungstag und Bekanntmachung des Hinweises auf die Patenterteilung: **20.04.2005**
(21) Anmeldenummer: 99904716.0
(22) Anmeldetag: 15.01.1999
(51) Int. Cl.: H04Q 7/32, H04M 1/00

(54) **VERFAHREN ZUR ENDGERÄTEUNTERSTÜTZTEN MENÜFÜHRUNG VON MEHRWERTDIENSTEN IN MOBILKOMMUNIKATIONSSYSTEMEN**
METHOD FOR TERMINAL ASSISTED MENU PRESENTATION OF ADDED VALUE SERVICES IN MOBILE COMMUNICATION SYSTEMS
PROCEDE DE PRESENTATION ASSISTE PAR TERMINAL D'UN MENU CONCERNANT DES SERVICES A VALEUR AJOUTEE DANS DES SYSTEMES DE COMMUNICATION MOBILES

(30) Priorität: 19.01.1998 DE 19801576
(43) Veröffentlichungstag der Anmeldung: 08.11.2000
(73) Patentinhaber: T-Mobile Deutschland GmbH, 53227 Bonn (DE)
(72) Erfinder: SASSE, Andreas, D-53773 Hennef (DE)
(74) Vertreter: Riebling, Peter, Dr.-Ing.
(86) Internationale Anmeldenummer: PCT/DE1999/000076
(87) Internationale Veröffentlichungsnummer: WO 1999/037107

(56) Entgegenhaltungen:
- EP-A- 0 772 367
- DE-A- 19 610 840

## Beschreibung

Die vorliegende Erfindung betrifft ein Verfahren zur endgeräteunterstützten Menüführung von Mehrwertdiensten in Mobilkommunikationssystemen, nach dem Oberbegriff des Patentanspruchs 1.

Bisher muß sich ein Teilnehmer eines Mobilkommunikationssystems nach Anwahl eines Mehrwertdienste-Knotens (Value-Added-Service-Knoten, VAS-Knoten), wie z. B. eines Mobilboxsystems, über mündliche Ansagen im Menü orientieren um entsprechende Eingaben und Abfragen vornehmen zu können. Dies ist relativ zeitaufwendig, mühsam und fehlerträchtig, da der Teilnehmer sich meist mehrere Zuordnungen (Nummer-Funktion) merken muß. Vergißt er eine Zuordnung, muß er sich den Ansagetext erneut abspielen lassen. Dadurch kann der Bedienvorgang relativ lange dauern.

Aus der EP-A-0 659 004 ist ein Mobiltelefon bekannt, bei dem unter Verwendung einer Taste (Softkey) ein bestimmter, vorgegebener Dienst abgerufen werden kann. Diese Belegung der Taste mit dem entsprechenden Dienst wird bei der Herstellung des Mobiltelefons vorgegeben und ist im Gerät selbst gespeichert.

Die DE-A-196 10 840 offenbart ein Verfahren zum Laden von elektronischen Spielen auf ein mobiles Kommunikationsendgerät eines Mobilkommunikationsnetzes. Ein Teilnehmer kann mit seinem Kommunikationsendgerät über einen Dialog mit einer mobilfunknetzseitigen Steuereinrichtung kommunizieren und zumindest ein Spiel aus einer Reihe von bereitgehaltenen Spielen auswählen, wobei nach Auswahl die dem Spiel zugeordneten Daten und/oder das Spielprogramm von der Steuereinrichtung zum Kommunikationsendgerät übertragen und dort abgespeichert werden. Das gespeicherte Spiel kann nun vom Teilnehmer auf seinem Endgerät ausgeführt werden. Eine Übertragung von Daten an das Endgerät zur endgeräteunterstützten Menüführung von Mehrwertdiensten ist in dieser Schrift nicht offenbart.

Die EP-A-0 772 367 betrifft ein Mobilfunksystem mit einer zentralen Servicestation, die mit einer Mobilstation in Funkkontakt steht und mit dieser Daten austauscht. Zur Steuerung der Datenkommunikation umfasst die Mobilstation einen durch ein Steuerprogramm gesteuerten Mikroprozessor, der von der Servicestation ausgesendete Kurzmitteilungen erkennt und auswertet. Der Mikroprozessor ändert auf Grundlage von in der Kurzmitteilung enthaltenden Informationen den Inhalt seines Steuerprogramms. Auf diese Weise können technische Funktionen der Mobilstation freigegeben oder gesperrt werden. Dieses Verfahren befasst sich demnach mit einer reinen Beeinflussung von bereits in der Mobilstation vorhandenen Steuerprogrammen durch die Servicestation und nicht mit einer Übertragung, Modifikation und Ausführung von Programmen zur Steuerung von Mehrwertdiensten im Endgerät.

Der Erfindung liegt die Aufgabe zugrunde, ein Verfahren zur endgeräteunterstützten Menüführung von Mehrwertdiensten in Mobilkommunikationssystemen vorzuschlagen, welches den Teilnehmer über seine Mobilstation optimal in der Bedienung eines Mehrwertdienstes unterstützt.
Diese Aufgabe wird durch die kennzeichnenden Merkmale des Patentanspruchs 1 gelöst.

Es wird beschrieben, Objekte (Programme, Daten etc.) in Mobilstationen zur Unterstützung der Bedienung eines Mehrwertdienste-Knotens einzusetzen. Erfindungsgemäß werden die Objekte in das ME (Mobile Equipment) oder die SIM (Subscriber Identity Module) eines Mobilendgerätes geladen, über die Luftschnittstelle gesteuert,.modifiziert oder zur Ausführung gebracht. Die Objekte unterstützen die Bedienung zwischen Mobilstationnutzer und dem Mehrwertdienste-Knoten derart, daß das Menü zur Nutzung des entsprechenden Mehrwertdienstes auf dem Display der MS (Mobilstation) ganz oder in Teilen abhängig von der tatsächlichen Position im Menü angezeigt wird.

Der Mobilstationnutzer kann durch Betätigen der im Menü angezeigten Tasten Funktionen in den Mehrwertdienste-Knoten auslösen wie z. B. Abhören von neuen Nachrichten in der Mobilbox. Nach Betätigen einer Taste wird das Menü im Display des Mobilendgeräts entsprechend der im Mehrwertdienste-Knoten stattgefundenen Aktion durch den Mehrwertdienste-Knoten angepaßt. Das kann auch durch das Laden eines neuen Objekts oder durch Modifizieren eines bereits geladenen Objekts geschehen.
Die Objekte ermöglichen eine vorzugsweise visuelle Menüführung in der Mobilstation für den angewählten Mehrwertdienst, was die Bedienung für den Teilnehmer wesentlich erleichtert.

Objekte werden entweder über die Luftschnittstelle oder an speziellen Ladestationen z. B. beim Händler in die Mobilstation geladen. Angestoßen wird das Laden über die Luftschnittstelle vom Nutzer oder durch Ereignisse wie z. B. erstmaliger Anruf vom/an einen Mehrwertdienste-Knoten.
Die Objekte enthalten Daten und/oder Funktionen/Programme, die auf der SIM-Karte und/oder in der Mobilstation gespeichert und ausgeführt werden.
Objekte können sich an die Fähigkeiten der Mobilstation anpassen wie z. B. Größe des Displays, schwarz/weiß oder farbig. Diese Anpassung geschieht entweder über Polymorphismus oder durch Speicherung der Fähigkeiten der Mobilstation im Kommunikationsnetz, wodurch bei Bedarf entsprechend angepaßte Objekte geladen werden.
Aktiviert werden Objekte in der Mobilstation entweder explizit durch den Nutzer oder implizit durch Ereignisse wie Einbuchen in das Mobilfunknetz, Nachrichtenempfang (Kurznachricht, Anruf), usw.
Modifikationen von Objekten werden entweder explizit durch den Nutzer oder implizit durch das Objekt selbst veranlaßt, z. B. zum Update einer Menüstruktur.

Die Erfindung wird nachstehend anhand eines in der Zeichnungsfigur dargestellten Beispiels näher erläutert.

Die Zeichnungsfigur zeigt eine Darstellung der beteiligten Systeme. Die Objekte (Applikationen) werden in einem Objekt-Zentrum 9 in einer Datenbank gehalten.
Das Laden der Objekte in die Mobilstation 1 (Mobile Equipment 2 und/oder (U)SIM 3) oder ein Modifizieren der Objekte geschieht über die Luftschnittstelle 5 des Mobilfunknetzes 4 oder die Schnittstelle eines SIM-Kartenlesers eines Diensteanbieters 10 (Service Provider).

Als Übertragungsmechanismus der Objekte über das Mobilfunknetz 4 sind vorzugsweise Kurznachrichten (SM: Short Messages) oder GPRS-Dienste nutzbar.
Zur Steuerung der Objekte dienen ebenfalls Kurznachrichten (SM) oder GPRS-Dienste. Alternativ können von der Mobilstation 1 DTMF-Töne (Dual Tone Multi Frequency) bei bestehender Sprachverbindung z. B. zu Mobilboxsystemen verwendet werden. Die DTMF-Töne werden von der Applikation im Mehrwertdienste-Knoten 7 ausgewertet und können entsprechende Steuernachrichten an die Objekte über Kurznachrichten (SM) oder GPRS-Dienste nach sich ziehen.
Sofern eine Anpassung von Objekten an die individuellen Fähigkeiten der Mobilstation 1 erfolgen soll, sind entsprechende Profile der Fähigkeiten entweder im Heimatregister 8 (HLR: Home Location Register) des Teilnehmers oder im Objektzentrum 9 verfügbar. Im ersten Fall muß das Objekt-Zentrum 9 das Heimatregister 8 nach dem entsprechenden Profil abfragen.

Das SIM Application Toolkit nach der GSM Empfehlung 11.14 bietet eine Grundfunktionalität, Programme und Daten über die Luftschnittstelle 5 in die Mobilstation 1 zu laden und in der SIM 3 zur Ausführung zu bringen. Das in der Erfindung beschriebene Verfahren kann mit Hilfe dieser Grundfunktionalität umgesetzt werden. Das Verfahren kann jedoch auch auf Basis anderer Mechanismen realisiert werden.
Die folgenden Ausführungen beschreiben das Laden und Aktivieren von Objekten auf Basis des SIM Application Toolkits zur Unterstützung der Bedienung eines Mehrwertdienstes und sind als eine mögliche konkrete Ausprägung der Erfindung zu verstehen.

Ein Objekt enthält eine Kurzform des Menüs eines Mehrwertdienstes mit einer festen Zuordnung zwischen den Tasten der Mobilstation und Aktionen des Mehrwertdienstes.
Objekte werden bei Erstkontakt (Anruf) einer Mobilstation mit dem Mehrwertdienste-Knoten 7 über den Kurznachrichtendienst 6 in das Teilnehmeridentifikationsmodul 3 (SIM) geladen. Dazu stößt der Mehrwertdienste-Knoten 7 über eine Nachricht eine entsprechende Prozedur im Objekt-Zentrum 9 an, wodurch dann das dem angewählten Mehrwertdienst zugeordnete Objekt in die Mobilstation 1 geladen wird.

Aktiviert wird ein Objekt bei aufgebautem Ruf zum Mehrwertdienste-Knoten, indem der Mehrwertdienste-Knoten 7 eine Kurznachricht (SMS) zur Mobilstation 1 sendet. In dieser Kurznachricht ist eine Versionsnummer enthalten, die mit der Versionsnummer des in der Mobilstation vorhandenen Objekts verglichen wird und gegebenenfalls das Laden eines aktuelleren Objekts veranlaßt.
Hat der Nutzer einen Menüpunkt über die Tastatur ausgewählt und ist diese Operation im Mehrwertdienste-Knoten 7 erfolgreich ausgeführt worden, so sendet der Mehrwertdienste-Knoten 7 eine Kurznachricht (SM) an die SIM 3. Die SIM 3 aktualisiert daraufhin die Anzeige im Display der Mobilstation 1.

Modifiziert werden Objekte über Kurznachrichten (SM). Dies geschieht im wesentlichen bei Upgrades, d. h. wenn sich das Menü im Mehrwertdienste-Knoten 7 oder das Menü eines einzelnen Mehrwertdienstes geändert hat und das Objekt darauf angepaßt wird. Gegebenenfalls wird das Objekt vollständig gelöscht und durch ein neues ersetzt.

Alternativ können Objekte im Teilnehmeridentifikationsmodul 3 bei einem Diensteanbieter 10 geladen und modifiziert werden.

Dies geschieht mittels eines SIM-Kartenlese- und Schreibgerätes 11 des Diensteanbieters 10, mittels welchem die erforderlichen Daten in den Speicher der SIM geschrieben werden. Die entsprechenden Objektdaten kann sich der Diensteanbieter von dem Objekt-Zentrum 9 anfordern und dem SIM-Kartenlese- und Schreibgerät 11 zur Verfügung stellen.

### Zeichnungslegende

- 1: Mobilstation
- 2: ME Mobile Equipment
- 3: Teilnehmeridentifikationsmodul (SIM, USIM)
- 4: Mobilfunknetz
- 5: Luftschnittstelle
- 6: Kurznachrichten-Dienstezentrum (Short Message Service Center)
- 7: Mehrwertdienste-Knoten (VAS-Knoten)
- 8: Heimatregister (HLR)
- 9: Objekt-Zentrum
- 10: Diensteanbieter (Service Provider)
- 11: SIM-Kartenlese- und Schreibgerät (Schnittstelle)

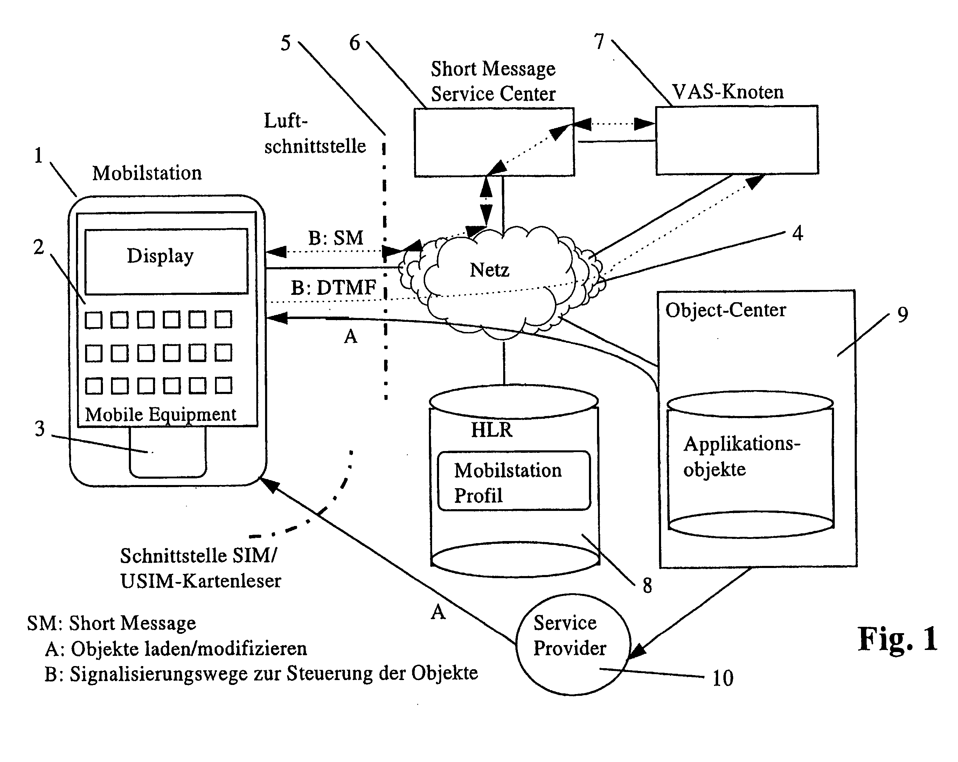

## Patentansprüche

1. Verfahren zur endgeräteunterstützten Menüführung von Mehrwertdiensten in Mobilkommunikationssystemen, wobei die Mehrwertdienste über Mehrwertdienste-Knoten zugänglich sind, wobei Objekte in eine ein Mobilendgerät und ein Teilnehmeridentifikationsmodul umfassende Mobilstation geladen werden,
**dadurch gekennzeichnet,**
**daß** die Objekte über die Luftschnittstelle des Mobilkommunikationssystems gesteuert, modifiziert oder zur Ausführung gebracht werden und aus Programmen, Funktionen und/oder Daten bestehen, welche die Kommunikation zwischen Teilnehmer und Mehrwertdienste-Knoten und die Bedienung der angebotenen Mehrwertdienste unterstützen.

2. Verfahren nach Anspruch 1, **dadurch gekennzeichnet, daß** das Laden der Objekte in die Mobilstation über die Luftschnittstelle erfolgt.

3. Verfahren nach Anspruch 1, **dadurch gekennzeichnet, daß** das Laden und/oder Modifizieren der Objekte an speziellen Ladestationen beim Händler, Diensteanbieter etc. erfolgt.

4. Verfahren nach einem der Ansprüche 1-3, **dadurch gekennzeichnet, daß** mit Hilfe der Objekte ein Menü für einen Mehrwertdienste-Knoten erzeugt und auf dem Display der Mobilstation ganz oder in Teilen angezeigt wird.

5. Verfahren nach Anspruch 4, **dadurch gekennzeichnet, daß** das Menü im Display der Mobilstation in Abhängigkeit der im Mehrwertdienst-Knoten zuvor ausgeführten Aktionen verändert, angepasst und/oder durch Laden eines neuen Objekts aktualisiert wird.

6. Verfahren nach einem der Ansprüche 1-5, **dadurch gekennzeichnet, daß** die Objekte in einem Objekt-Zentrum des Mobilkommunikationssystems gespeichert sind und von dort abgerufen und in das Mobilendgerät geladen werden.

7. Verfahren nach einem der Ansprüche 1-6, **dadurch gekennzeichnet, daß** die Objekte in einen Speicher des Mobilendgeräts (Mobile Equipment ME) der Mobilstation geladen werden.

8. Verfahren nach einem der Ansprüche 1-7, **dadurch gekennzeichnet, daß** die Objekte in einen Speicher des Teilnehmeridentifikationsmoduls geladen werden.

9. Verfahren nach einem der Ansprüche 1-8, **dadurch gekennzeichnet, daß** die Übertragung, Aktivierung, Modifizierung und Aktualisierung der Objekte über Kurznachrichten oder GPRS-Dienste des Mobilkommunikationssystems erfolgt.

10. Verfahren nach einem der Ansprüche 1-9, **dadurch gekennzeichnet, daß** durch die Objekte Tasten oder Tastenkombinationen der Mobilstation einzelnen Funktionen der Mehrwertdienste zugeordnet werden.

11. Verfahren nach einem der Ansprüche 1-10, **dadurch gekennzeichnet, daß** das Laden und/oder Modifizieren der Objekte in die Mobilstation durch ausgewählte Ereignisse veranlasst wird.

12. Verfahren nach einem der Ansprüche 1-11, **dadurch gekennzeichnet, daß** das Laden und/oder Modifizieren der Objekte in die Mobilstation durch den Teilnehmer selbst veranlasst wird.

13. Verfahren nach einem der Ansprüche 1-12, **dadurch gekennzeichnet, daß** die Objekte sich an die technischen Fähigkeiten der Mobilstation anpassen, indem diese die Fähigkeiten der Mobilstation prüfen und sich selbständig darauf einstellen.

14. Verfahren nach einem der Ansprüche 1-13, **dadurch gekennzeichnet, daß** die technischen Fähigkeiten der Mobilstationen in einer speziellen Datenbank abgelegt sind, und vor dem Laden eines Objektes in eine bestimmte Mobilstation geprüft wird, welche Fähigkeiten diese besitzt, und danach ein geeignetes Objekt ausgewählt und in die Mobilstation geladen wird.

## Claims

1. Method for terminal-device assisted menu-driven guidance to value-added services in mobile communications systems, wherein the value-added services are accessible via value-added service nodes and wherein objects are loaded into a mobile station comprising a mobile terminal device and a subscriber identification module, **characterised in that** the objects are controlled, modified or caused to execute via the air interface of the mobile communications system and consist of programs, functions and/or data which support communication between the subscriber and value-added service nodes and manipulation of the value-added services supplied.

2. Method according to claim 1, **characterised in that** loading of the objects into the mobile station ensues via the air interface.

3. Method according to claim 1, **characterised in that** loading and/or modification of the objects ensues at special loading stations at the dealer, service provider, etc.

4. Method according to one of claims 1-3, **characterised in that** with the aid of the objects a menu for a value-added service node is produced and displayed in whole or in part on the display of the mobile station.

5. Method according to claim 4, **characterised in that** the menu in the display of the mobile station is altered, adapted and/or updated by loading a new object as a function of the actions previously executed in the value-added service node.

6. Method according to one of claims 1-5, **characterised in that** the objects are stored in an object centre of the mobile communications system and are called up from there and loaded into the mobile terminal device.

7. Method according to one of claims 1-6, **characterised in that** the objects are loaded into a memory of the mobile terminal device (mobile equipment ME) of the mobile station.

8. Method according to one of claims 1-7, **characterised in that** the objects are loaded into a memory of the subscriber identification module.

9. Method according to one of claims 1-8, **characterised in that** the transmission, activation, modification and updating of the objects ensues via short messages or GPRS services of the mobile communications system.

10. Method according to one of claims 1-9, **characterised in that** by means of the objects keys or combinations of keys of the mobile station are assigned to individual functions of the value-added services.

11. Method according to one of claims 1-10, **characterised in that** loading and/or modification of the objects into the mobile station is initiated by selected events.

12. Method according to one of claims 1-11, **characterised in that** loading and/or modification of the objects into the mobile station is initiated by the subscriber him/herself.

13. Method according to one of claims 1-12, **characterised in that** the objects adapt themselves to the technical capabilities of the mobile station **in that** the objects examine the capabilities of the mobile station and independently adjust themselves thereto.

14. Method according to one of claims 1-13, **characterised in that** the technical capabilities of the mobile stations are filed in a special database and prior to loading an object into a certain mobile station a check is made on which capabilities the latter possesses and then a suitable object is selected and loaded into the mobile station.

## Revendications

1. Procédé pour la commande par menu, à l'aide d'un terminal, de services à valeur ajoutée dans des systèmes de communication mobile, les services à valeur ajoutée étant accessibles par l'intermédiaire de noeuds de services à valeur ajoutée et des objets étant chargés dans une station mobile qui comprend un terminal mobile et un module d'identification d'abonné,
**caractérisé en ce que** les objets sont commandés, modifiés ou mis en application par l'intermédiaire de l'interface radio du système de communication mobile et se composent de programmes, de fonctions et/ou de données qui assistent la communication entre l'abonné et le noeud de services à valeur ajoutée ainsi que le maniement des services à valeur ajoutée proposés.

2. Procédé selon la revendication 1, **caractérisé en ce que** le chargement des objets dans la station mobile se fait par l'intermédiaire de l'interface radio.

3. Procédé selon la revendication 1, **caractérisé en ce que** le chargement et/ou la modification des objets se font au niveau de stations de chargement spéciales chez le commerçant, le fournisseur de service, etc.

4. Procédé selon l'une des revendications 1 à 3, **caractérisé en ce qu'**à l'aide des objets, un menu est généré pour un noeud de services à valeur ajouté et est visualisé entièrement ou partiellement sur l'affichage de la station mobile.

5. Procédé selon la revendication 4, **caractérisé en ce que** le menu est modifié, adapté et/ou actualisé grâce à au chargement d'un nouvel objet, dans l'affichage de la station mobile, en fonction des actions exécutées précédemment dans le noeud de services à valeur ajoutée.

6. Procédé selon l'une des revendications 1 à 5, **caractérisé en ce que** les objets sont mis en mémoire dans un centre d'objets du système de communication mobile et, de là, sont appelés et chargés dans le terminal mobile.

7. Procédé selon l'une des revendications 1 à 6, **caractérisé en ce que** les objets sont chargés dans une mémoire du terminal mobile (équipement mobile ME) de la station mobile.

8. Procédé selon l'une des revendications 1 à 7, **caractérisé en ce que** les objets sont chargés dans une mémoire du module d'identification d'abonné.

9. Procédé selon l'une des revendications 1 à 8, **caractérisé en ce que** la transmission, l'activation, la modification et l'actualisation des objets se font par l'intermédiaire de messages courts ou de services généraux de radiocommunication par paquets (GPRS) du système de communication mobile.

10. Procédé selon l'une des revendications 1 à 9, **caractérisé en ce que** grâce aux objets, des touches ou des combinaisons de touches de la station mobile sont attribuées à des fonctions individuelles des services à valeur ajoutée.

11. Procédé selon l'une des revendications 1 à 10, **caractérisé en ce que** le chargement et/ou la modification des objets dans la station mobile sont provoqués par des événements choisis.

12. Procédé selon l'une des revendications 1 à 11, **caractérisé en ce que** le chargement et/ou la modification des objets dans la station mobile sont provoqués par l'abonné lui-même.

13. Procédé selon l'une des revendications 1 à 12, **caractérisé en ce que** les objets s'adaptent aux capacités techniques de la station mobile en contrôlant les capacités de la station mobile et en se réglant de manière autonome en fonction de celles-ci.

14. Procédé selon l'une des revendications 1 à 13, **caractérisé en ce que** les capacités techniques des stations mobiles sont stockées dans une banque de données spéciales, et avant le chargement d'un objet dans une station mobile définie, on vérifie quelles capacités a celle-ci puis un objet approprié est sélectionné et est chargé dans la station mobile.
